# EUROPÄISCHE PATENTSCHRIFT

(11) **EP 2 936 642 B1**
(45) Veröffentlichungstag und Bekanntmachung des Hinweises auf die Patenterteilung: **26.10.2016**
(21) Anmeldenummer: 13798291.4
(22) Anmeldetag: 21.11.2013
(51) Int. Cl.: H02J 3/14

(54) **VERFAHREN ZUM AUSWÄHLEN EINES VON MEHREREN BETRIEBSMODI EINES HAUSGERÄTS**
METHOD FOR SELECTING ONE OF A PLURALITY OF OPERATING MODES OF A DOMESTIC APPLIANCE
PROCÉDÉ DE SÉLECTION D'UN MODE DE FONCTIONNEMENT PARMI PLUSIEURS MODES DE FONCTIONNEMENT D'UN APPAREIL ÉLECTROMÉNAGER

(30) Priorität: 21.12.2012 DE 102012224129
(43) Veröffentlichungstag der Anmeldung: 28.10.2015
(73) Patentinhaber: BSH Hausgeräte GmbH, 81739 München (DE)
(72) Erfinder: BÖLDT, Frank, 14656 Brieselang (DE)
(86) Internationale Anmeldenummer: PCT/EP2013/074362
(87) Internationale Veröffentlichungsnummer: WO 2014/095219

(56) Entgegenhaltungen:
- DE-A1-102009 027 799
- DE-A1-102010 063 757

## Beschreibung

Die Erfindung betrifft ein Verfahren zum Auswählen eines von mehreren Betriebsmodi einer Waschmaschine gemäß dem Oberbegriff des Patentanspruchs 1.

Die Erfindung betrifft auch eine Waschmaschine gemäß dem Patentanspruch 5.

Eine Vielzahl von Hausgeräten ist heutzutage programmgesteuert. Dies ist insbesondere bei Waschmaschinen und Wäschetrocknern der Fall, bei denen eine Bedienperson die Möglichkeit hat, aus einer Vielzahl von Wasch- bzw. Trockenprogrammen auszuwählen. Je nach gewähltem Programm wird dann vollautomatisch der jeweilige Wasch- bzw. Trockenvorgang ausgeführt. So werden beispielsweise bei einer Waschmaschine die Waschgänge "Vorwäsche", "Hauptwäsche", "Spülen" und "Schleudern" nacheinander ausgeführt. Diese Programme sind üblicherweise starr festgelegt, ohne dass äußere Parameter berücksichtigt werden.

Darüber hinaus ist es bekannt, Hausgeräte in Hausnetzwerke einzubinden, sodass die einzelnen Geräte hinsichtlich einer Signalübertragung miteinander gekoppelt sind. Auf diese Art ist es für eine Bedienperson einfacher, die jeweiligen Hausgeräte zu bedienen. Eine zentrale Bedienung bzw. Fernsteuerung von einzelnen Hausgeräten wird möglich.

Mit der zunehmenden Einbindung von regenerativen Energiequellen, wie z. B. Wind-, Sonnen- und Wasserkraftwerken, ergibt sich nur eine begrenzte Vorhersagbarkeit des Energieangebots in einem Stromnetz. Ursache hierfür ist, dass trotz immer genauer werdender meteorologischer Vorhersagen lokal stark schwankende Wetterbedingungen herrschen können, welche dann auch zu einer ebenso schwankenden Energieproduktion führen. Dies verursacht Schwankungen im Energieangebot in einem Stromnetz.

Um Energieangebot und -nachfrage besser abzustimmen, sind intelligente Stromnetze (englisch: SmartGrids) bekannt. Das intelligente Stromnetz erlaubt es, Stromerzeuger und

Stromverbraucher kommunikativ zu vernetzen. So kann beispielsweise vorgesehen sein, dass bei zu erwartender oder eingetretener Überlast auf dem Stromnetz Signale an Verbraucher übermittelt werden, wodurch selbige in einen Energiespar- oder Leistungsabsenkungsmodus übergehen. Auf diese Art stellen intelligente Stromversorgungsnetze sicher, dass Überlasten vermieden werden und eine gleichmäßige Lastverteilung erzielt wird.

Dokument DE 102009027799 A1 zeigt eine Waschmaschine gemäß dem Oberbegriff des Patentanspruchs 1.

Es ist Aufgabe der Erfindung, das Energieangebot in einem Stromnetz noch besser zu nutzen.

Diese Aufgabe wird durch ein Verfahren, welches die Merkmale des Patentanspruchs 1 aufweist, sowie eine Waschmaschine welches die Merkmale des Patentanspruchs 5 aufweist, gelöst.

Das erfindungsgemäße Verfahren dient zum Auswählen eines von mehreren Betriebsmodi eines Hausgeräts, welches dazu ausgebildet ist, elektrische Energie über ein Stromnetz zu beziehen und Daten betreffend die über das Stromnetz bereitgestellte elektrische Energie zu empfangen. Hierbei weist das Hausgerät in einem ersten der Betriebsmodi eine höhere elektrische Leistungsaufnahme auf als in einem zweiten der Betriebsmodi. Das erfindungsgemäße Verfahren umfasst die folgenden Schritte:
- Festlegen eines Kriteriums für die Daten betreffend die über das Stromnetz bereitgestellte elektrische Energie;
- zumindest Einleiten eines Betriebs des Hausgeräts im zweiten Betriebsmodus;
- Empfangen von Daten betreffend die über das Stromnetz bereitgestellte elektrische Energie durch das Hausgerät;
- für den Fall, dass die empfangenen Daten das festgelegte Kriterium erfüllen, Betreiben des Hausgeräts im ersten Betriebsmodus, ansonsten Betreiben des Hausgeräts im zweiten Betriebsmodus.

Durch das Verfahren ist es insbesondere möglich, dass das Hausgerät von einem stromsparenden Betriebsmodus in einen vergleichsweise mehr elektrische Leistung aufnehmenden Betriebsmodus wechseln kann. Ob solch ein Wechsel stattfindet wird insbesondere anhand von Daten entschieden, welche die jeweils auf dem Stromnetz bereitgestellte elektrische Energie betreffen. Auf diese Art wird erreicht, dass sich das Hausgerät flexibel an die jeweils auf dem Stromnetz herrschenden Bedingungen anpasst. Hausgerät und Stromnetz sind insbesondere nicht mehr für sich genommen autarke Einheiten, sondern interagieren um sich jeweils hinsichtlich ihres Energiemanagements aufeinander abzustimmen. Folglich kann das Energieangebot des Stromnetzes sehr gut genutzt werden.

Es kann insbesondere vorgesehen sein, dass das Hausgerät trotz der höheren elektrischen Leistungsaufnahme in dem ersten Betriebsmodus dennoch gegenüber dem zweiten Betriebsmodus eine verbesserte Umweltbilanz aufweist. So kann beispielsweise vorgesehen sein, dass trotz der höheren elektrischen Leistungsaufnahme im ersten Betriebsmodus weniger andere Ressourcen (z. B. Wasser) als im zweiten Betriebsmodus verbraucht werden. Auf diese Art wird ein sehr umweltschonendes Hausgerät geschaffen. Der Betrieb des Hausgeräts im zweiten Betriebsmodus kann beispielsweise durch eine Bedienperson eingeleitet worden sein und gegebenenfalls auch bereits ablaufen. Durch Prüfung des Kriteriums nach Empfang der Daten kann dann automatisch entschieden werden, ob der zweite Betriebsmodus ausgeführt bzw. beibehalten wird, oder ob ein Wechsel in den ersten Betriebsmodus stattfinden soll. Es kann insbesondere auch vorgesehen sein, dass kontinuierlich oder regelmäßig Daten empfangen werden und die Überprüfung des Kriteriums ebenso kontinuierlich bzw. regelmäßig stattfindet. Ist dann beispielsweise das Kriterium nicht mehr erfüllt, kann ebenfalls vorgesehen sein, dass das Hausgerät von dem ersten Betriebsmodus wieder in den zweiten Betriebsmodus zurückwechselt.

Vorzugsweise betreffen die Daten ein Energieangebot in dem Stromnetz und das Kriterium wird vorzugsweise so festgelegt, dass es erfüllt ist, wenn das Energieangebot einen vorgebbaren Schwellwert übersteigt. Auf diese Art wird ein hohes Energieangebot auf dem Stromnetz nicht ungenutzt gelassen, sondern das Hausgerät wird durch die bereitgestellten Daten zur erhöhten Leistungsaufnahme animiert. Ein hohes Energieangebot auf dem Netz bleibt nicht ungenutzt, und die Netzstabilität wird gewährleistet. Neben einem einzigen Schwellwert können insbesondere auch mehrere, sukzessiv aufeinanderfolgende Schwellwerte vorgesehen sein, sodass mit steigendem Energieangebot jeweils bei Überschreiten des zugehörigen Schwellwertes ein Übergang in einen zugeordneten Betriebsmodus stattfindet, welcher eine höhere elektrische Leistungsaufnahme als der jeweils vorhergehende Betriebsmodus aufweist. Zu diesem Zweck können mehrere erste Betriebsmodi mit unterschiedlich hohen elektrischen Leistungsaufnahmen vorgesehen sein. Das Hausgerät passt seinen Energieverbrauch variabel an die zur Verfügung stehende Energie auf dem Netz an.

Alternativ hierzu kann vorzugsweise vorgesehen sein, dass die Daten ein Energieangebot in dem Stromnetz betreffen, und das Kriterium so festgelegt wird, dass es erfüllt ist, wenn ein Energiepreis einen vorgebbaren Schwellwert unterschreitet. Dann wird insbesondere in den ersten Betriebsmodus mit der höheren elektrischen Leistungsaufnahme übergegangen, wenn Energie besonders kostengünstig ist und einen vorgegebenen Strompreisschwellwert unterschreitet. Zu diesem Zweck kann insbesondere auch vorgesehen sein, dass die Daten Tarifinformationen bezüglich des Energiepreises umfassen. Auf diese Art lässt sich trotz höherem Energieverbrauch und gegebenenfalls gleichzeitig verbesserter Umweltbilanz des Hausgeräts eine Stromkosteneinsparung für eine Bedienperson erzielen. Zu diesem Zweck kann insbesondere auch vorgesehen sein, dass das Hausgerät und/oder das Stromnetz mit einem Stromkostenzähler zum Zwecke des Datenaustauschs verbunden sind.

Vorzugsweise erhält das Hausgerät die Daten direkt über das Stromnetz, z. B. über eine sogenannte Powerline. Alternativ oder zusätzlich kann vorgesehen sein, dass das Hausgerät die Daten über ein drahtgebundenes Kommunikationsnetz, insbesondere ein Telefonnetz, empfängt. Es ist jedoch auch möglich, dass ein drahtloses Kommunikationsnetz, insbesondere ein Mobilfunknetz, zum Übertragen der Daten an das Hausgerät eingesetzt wird. Schließlich kann auch vorgesehen sein, dass das Hausgerät die Daten über das Internet empfängt und zu diesem Zwecke beispielsweise über einen Ethernetanschluss verfügt. Das Hausgerät kann hierzu in ein LAN bzw. WLAN Hausnetzwerk eingebunden sein. Diese Art der Datenübertragung ist zuverlässig, etabliert und einfach implementierbar.

Ein erfindungsgemäßes Hausgerät ist dazu ausgebildet, elektrische Energie über ein Stromnetz zu beziehen und Daten betreffend die über das Stromnetz bereitgestellte elektrische Energie zu empfangen. Das Hausgerät ist in mehreren Betriebsmodi betreibbar und in einem ersten der Bertriebsmodi weist es eine höhere elektrische Leistungsaufnahme auf als in einem zweiten der Betriebsmodi. Das Hausgerät ist ferner dazu ausgebildet, für den Fall, dass die empfangenen Daten ein festlegbares Kriterium betreffend die über das Stromnetz bereitgestellte elektrische Energie erfüllen, von einem zumindest eingeleiteten Betrieb des Hausgeräts vom zweiten Betriebsmodus, in den ersten Betriebsmodus überzugehen, und ansonsten im zweiten Betriebsmodus betrieben zu werden.

Unter einem Hausgerät werden insbesondere Geräte zur Pflege von Wäschestücken verstanden; Es kann sich aber auch um Geräte zur Zubereitung von Lebensmitteln, zur Reinigung von Geschirr oder dergleichen sowie um Geräte zur Lagerung und Konservierung von Lebensmitteln handeln. In diesem Zusammenhang werden beispielsweise Waschmaschinen, Wäschetrockner, Backöfen, Kochfelder, Dampfgargeräte, Mikrowellengeräte, Geschirrspüler, Kühlschränke, Gefrierschränke etc. genannt. Ebenso kann es sich bei dem Hausgerät um eine Kaffeemaschine oder einen Wasserkocher oder dergleichen handeln.

Erfindungsgemäss handelt es sich bei dem Hausgerät jedoch um eine Waschmaschine, wobei der erste Betriebsmodus einen Spülvorgang mit Wasser umfasst, welches über die bereitgestellte elektrische Energie aufgeheizt wird. Erfindungsgemäss ist in dem zweiten Betriebsmodus ein Spülvorgang mit kaltem, nicht elektrisch aufgeheiztem Wasser vorgesehen und in dem ersten Betriebsmodus ein Spülen mit warmen, über die elektrische Energie aufgeheiztem Wasser Steht auf dem Stromnetz beispielsweise mehr elektrische Energie zur Verfügung, so kann die Waschmaschine in den Betriebsmodus mit dem Warmwasserspülvorgang wechseln. Zwar wird dann mehr elektrische Energie verbraucht, jedoch kann unter Einsatz von weniger Wasser eine verbesserte Spülwirkung als beim Kaltwasserspülen erzielt werden. Durch den geringeren Wasserverbrauch kann die gesamte Umweltbilanz der Waschmaschine dann gegebenenfalls sogar besser ausfallen als im Falle des Kaltspülens. Mit dem Warmspülen geht auch eine Zeitersparnis des gesamten Waschvorgangs einher.

Zusätzlich kann vorzugsweise vorgesehen sein, dass im ersten Betriebsmodus eine Einschaltdauer eines Elektromotors für den Betrieb einer Waschtrommel der Waschmaschine größer als im zweiten Betriebsmodus ist. Dann bewegt sich die Waschtrommel insbesondere im ersten Betriebsmodus mehr als im zweiten Betriebsmodus. Die Waschwirkung kann auf diese Art verbessert und der gesamte Waschvorgang verkürzt werden. Trotz des erhöhten Stromverbrauchs aufgrund der erhöhten Einschaltdauer des Elektromotors ergibt sich für eine Bedienperson der erhebliche Vorteil einer verkürzten Waschdauer. Die Wäsche wird gegebenenfalls auch gründlicher gereinigt.

Die mit Bezug auf das erfindungsgemäße Verfahren vorgestellten bevorzugten Ausführungsformen und deren Vorteile gelten entsprechend für das erfindungsgemäße Hausgerät.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die in der Figurenbeschreibung genannten Merkmale und Merkmalskombinationen und/oder die in den Figuren alleine gezeigten Merkmale und Merkmalskombinationen, sind nicht nur in der jeweils angegebenen Kombination sondern auch in anderen Kombinationen oder in Alleinstellung verwendbar, ohne den Rahmen der Erfindung zu verlassen. Anhand von Ausführungsbeispielen wird die Erfindung im Folgenden näher erläutert. Es zeigen:
- Fig. 1: eine schematische Darstellung einer Waschmaschine, welche an ein Stromnetz und an das Internet angeschlossen ist;
- Fig. 2a: einen zeitabhängigen Wechsel zwischen zwei Betriebsmodi; und
- Fig. 2b: einen zeitabhängigen Verlauf des Energieangebots auf einem Stromnetz.

In den Figuren sind gleiche oder funktionsgleiche Elemente mit den gleichen Bezugszeichen versehen.

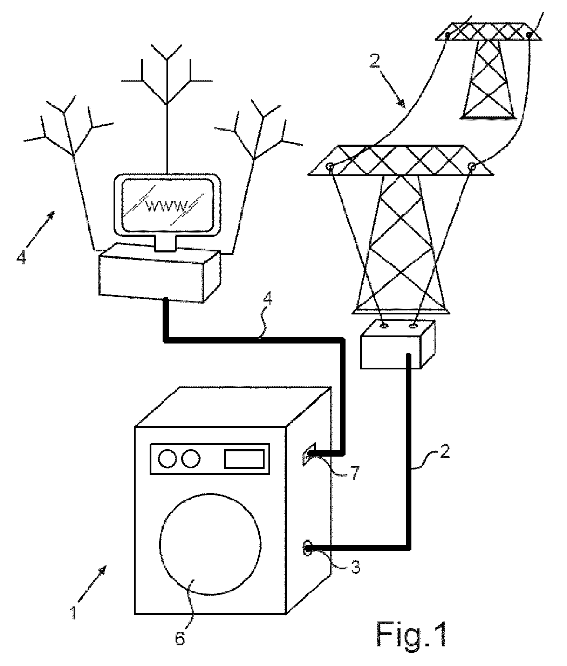

Fig. 1 zeigt eine Waschmaschine 1 mit einer Wäschetrommel 6 zur Aufnahme von Wäschestücken. Die Wäschetrommel 6 wird über einen Elektromotor in Rotation versetzt, sodass hierdurch während des Waschvorgangs die Wäsche bewegt und im Rahmen eines Schleudervorgangs geschleudert werden kann.

Für die Bereitstellung der elektrischen Energie ist die Waschmaschine 1 mit einem Stromnetz 2 verbunden. Die über das Stromnetz 2 bezogene elektrische Energie dient beispielsweise nicht nur dem Betrieb des Elektromotors der Waschmaschine 1, sondern auch dem Aufheizen von Frischwasser, welches zum Waschen der Wäsche genutzt wird. Hierzu ist eine Heizwendel in der Waschmaschine 1 vorgesehen.

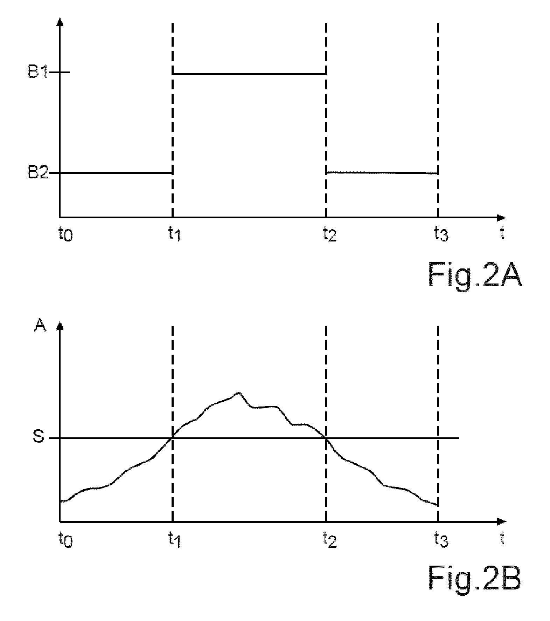

Neben einem Stromanschluss umfasst die Waschmaschine 1 auch einen Ethernetanschluss 7, über den sie mit dem Internet 4 verbunden ist. Ein Strombetreiber des Stromnetzes 2 stellt über das Internet 4 Daten bereit, welche die über das Stromnetz 2 bereitgestellte elektrische Energie betreffen. Bei diesen Daten handelt es sich insbesondere um solche Daten, die das Energieangebot auf dem Stromnetz 2 bzw. einen momentanen Energiepreis des Stroms betreffen. Diese Daten werden von der Waschmaschine 1 ausgelesen und im Rahmen einer intelligenten Waschprogrammsteuerung berücksichtigt. Dies sei anhand der Figuren 2a und 2b näher erläutert.

Fig. 2b zeigt einen Verlauf eines Energieangebots A über die Zeit t. Ausgehend von einem Zeitpunkt t₀ wächst das Energieangebot zunächst, bevor es nach Erreichen eines Maximums bis zu einem Zeitpunkt t₃ wieder abfällt. Die Schwankung des Energieangebots ist im Ausführungsbeispiel wetterbedingt. Das hohe Energieangebot A zwischen zwei Zeitpunkten t₁ und t₂ ist insbesondere durch ein plötzliches Wolkenloch bedingt, wodurch eine Solarkraftanlage, welche an das Stromnetz 2 angeschlossen ist, plötzlich mehr Energie als erwartet bereitstellt. Die Waschmaschine ist so ausgebildet, dass sie dieses erhöhte Energieangebot nicht ungenutzt lässt.

Dies sei anhand von Fig. 2a erläutert. Zum Zeitpunkt t₀ leitet eine Bedienperson durch Wahl eines Waschprogramms an der Waschmaschine 1 einen Waschvorgang ein. Die Waschmaschine 1 wird hierbei in einem zweiten Betriebsmodus B2 betrieben, welcher besonders energiesparend ist. So ist im zweiten Betriebsmodus B2 vorgesehen, dass der Waschvorgang insgesamt zwei Stunden dauert, wobei die Wäschetrommel 6 so wenig wie möglich bewegt wird, um den Energieverbrauch des Elektromotors gering zu halten. Darüber hinaus ist im zweiten Betriebsmodus B2 im Anschluss an das Waschen ein Spülvorgang mit kaltem Spülwasser vorgesehen.

Bis zum Zeitpunkt t₁ liegt das Energieangebot A auf dem Stromnetz 2 unter einem festgelegten Schwellwert S, sodass in der Waschmaschine 1 der zweite Betriebsmodus

B2 abläuft. Während des Waschens wird deshalb die Wäschetrommel 6 nur wenig bewegt. Zum Zeitpunkt t1 überschreitet jedoch das Energieangebot A den Schwellwert S. Diese Information steht der Waschmaschine 1 über das Internet 4 zur Verfügung. Auf Grundlage dieser Information schaltet nunmehr die Waschmaschine 1 in einen ersten Betriebsmodus um, welcher gegenüber dem zweiten Betriebsmodus mit einer erhöhten elektrischen Leistungsaufnahme verbunden ist. So ist im ersten Betriebsmodus B1 vorgesehen, dass die Wäschetrommel 6 über den Elektromotor mehr bewegt und auf diese Art der Waschvorgang beschleunigt wird. Zudem ist ein Spülvorgang mit warmem, elektrisch aufgeheiztem Wasser vorgesehen. Zwischen den Zeitpunkten t₁ und t₂ läuft der erste Betriebsmodus B1 ab, sodass also die Wäschetrommel 6 mehr bewegt wird als im zweiten Betriebsmodus B2.

Zum Zeitpunkt t₂ fällt das Energieangebot A unter den Schwellwert S. Dies wird wiederum von der Waschmaschine 1 registriert, sodass sie in den zweiten Betriebsmodus B2 zurückschaltet. Da immer noch der Waschvorgang stattfindet, wird nunmehr wiederum die Wäschetrommel 6 weniger bewegt. Der ursprünglich vorgesehene Warmspülmodus wird nicht durchgeführt. Das Spülen erfolgt nämlich zwischen den Zeitpunkten t₂ und t₃ und findet gemäß dem zweiten Betriebsmodus B2 mit kaltem Wasser statt. Zum Zeitpunkt t₃ ist der Waschvorgang beendet. Dadurch, dass zwischen den Zeitpunkten t₁ und t₂ die Waschmaschine 1 im ersten Betriebsmodus B1 betrieben wurde, hat sich nun die gesamte Waschzeit auf eineinhalb Stunden reduziert. Zudem wurde das erhöhte Stromangebot zwischen den Zeitpunkten t1 und t2 nicht ungenutzt gelassen Dadurch hat die Waschmaschine 1 auch zur Stabilität des Stromnetzes 2 beigetragen.

### Bezugszeichenliste

- 1: Waschmaschine
- 2: Stromnetz
- 3: Stromanschluss
- 4: Internet
- 5: Internetanschluss
- 6: Wäschetrommel
- 7: Ethernet-Anschluss
- B1: 1. Betriebsmodus
- B2: 2. Betriebsmodus
- A: Enegieangebot
- S: Schwellwert
- t: Zeit
- t₀, t₁, t₂, t₃: Zeitpunkt

## Patentansprüche

1. Verfahren zum Auswählen eines von mehreren Betriebsmodi (B1, B2) einer Waschmaschine (1), welche dazu ausgebildet ist, elektrische Energie über ein Stromnetz (2) zu beziehen und Daten betreffend die über das Stromnetz (2) bereitgestellte elektrische Energie zu empfangen, wobei in einem ersten (B1) der Betriebsmodi die Waschmaschine (1) eine höhere elektrische Leistungsaufnahme aufweist als in einem zweiten (B2) der Betriebsmodi, mit den Schritten:
- Festlegen eines Kriteriums für die Daten betreffend die über das Stromnetz (2) bereitgestellte elektrische Energie;
- zumindest Einleiten eines Betriebs der Waschmaschine (1) im zweiten Betriebsmodus (B2);
- Empfangen von Daten betreffend die über das Stromnetz (2) bereitgestellte elektrische Energie durch die Waschmaschine (1);
- für den Fall, dass die empfangenen Daten das festgelegte Kriterium erfüllen, Betreiben der Waschmaschine (1) im ersten Betriebsmodus (B1), ansonsten Betreiben der Waschmaschine (1) im zweiten Betriebsmodus (B2),
**dadurch gekennzeichnet, dass**
der erste Betriebsmodus (B1) einen Spülvorgang mit Wasser umfasst, welches über die bereitgestellte elektrische Energie aufgeheizt wird, und
in dem zweiten Betriebsmodus (B2) ein Spülvorgang mit kaltem, nicht elektrisch aufgeheiztem Wasser vorgesehen ist,
so dass im ersten Betriebsmodus (B1) unter Einsatz von weniger Wasser eine verbesserte Spülwirkung als beim zweiten Betriebsmodus (B2) erzielt wird.

2. Verfahren nach Anspruch 1,
**dadurch gekennzeichnet, dass**
die Daten ein Energieangebot (A) in dem Stromnetz (2) betreffen, und das Kriterium so festgelegt wird, dass es erfüllt ist, wenn das Energieangebot (A) einen vorgebbaren Schwellwert (S) übersteigt.

3. Verfahren nach Anspruch 1,
**dadurch gekennzeichnet, dass**
die Daten ein Energieangebot (A) in dem Stromnetz (2) betreffen, und das Kriterium so festgelegt wird, dass es erfüllt ist, wenn ein Energiepreis einen vorgebbaren Schwellwert unterschreitet.

4. Verfahren nach einem der vorhergehenden Ansprüche,
**dadurch gekennzeichnet, dass**
die Waschmaschine (1) die Daten über das Stromnetz (2) und/oder über ein drahtgebundenes Kommunikationsnetz, insbesondere ein Telefonnetz, und/oder ein drahtloses Kommunikationsnetz, insbesondere ein Mobilfunknetz, und/oder das Internet (4) empfängt.

5. Waschmaschine (1), welche dazu ausgebildet ist, elektrische Energie über ein Stromnetz (2) zu beziehen und Daten betreffend die über das Stromnetz (2) bereitgestellte elektrische Energie zu empfangen, wobei die Waschmaschine (1) in mehreren Betriebsmodi (B1, B2) betreibbar ist und in einem ersten (B1) der Betriebsmodi eine höhere elektrische Leistungsaufnahme aufweist als in einem zweiten (B2) der Betriebsmodi, wobei die Waschmaschine (1) ferner dazu ausgebildet ist, für den Fall, dass die empfangenen Daten ein festlegbares Kriterium betreffend die über das Stromnetz (2) bereitgestellte elektrische Energie erfüllen, von einem zumindest eingeleiteten Betrieb der Waschmaschine (1) im zweiten Betriebsmodus (B2), in den ersten Betriebsmodus (B1) überzugehen, und ansonsten im zweiten Betriebsmodus (B2) betrieben zu werden,
**dadurch gekennzeichnet, dass**
der erste Betriebsmodus (B1) einen Spülvorgang mit Wasser umfasst, welches über die bereitgestellte elektrische Energie aufgeheizt wird, und
in dem zweiten Betriebsmodus (B2) ein Spülvorgang mit kaltem, nicht elektrisch aufgeheiztem Wasser vorgesehen ist,
so dass im ersten Betriebsmodus (B1) unter Einsatz von weniger Wasser eine verbesserte Spülwirkung als beim zweiten Betriebsmodus (B2) erzielt wird.

6. Waschmaschine nach Anspruch 5, wobei im ersten Betriebsmodus (B1) eine Einschaltdauer eines Elektromotors für den Betrieb einer Waschtrommel (6) der Waschmaschine (1) größer als im zweiten Betriebsmodus (B2) ist.

## Claims

1. Method for selecting one of a plurality of operating modes (B 1, B2) of a washing machine (1), which is embodied to obtain electrical energy by way of a power supply (2) and to receive data relating to the electrical energy provided by way of the power supply (2), wherein in a first (B1) of the operating modes, the washing machine (1) has a higher electrical input power than in a second (B2) of the operating modes, having the steps:
- defining a criterion for the data relating to the electrical energy provided by way of the power supply (2);
- at least initiating an operation of the washing machine (1) in the second operating mode (B2);
- receiving data relating to the electrical energy provided by way of the power supply (2) by the washing machine (1);
- in the case that the received data fulfils the defined criterion, operating the washing machine (1) in the first operating mode (B1), otherwise operating the washing machine (1) in the second operating mode (B2),
**characterised in that**
the first operating mode (B1) comprises a wash cycle with water, which is heated by way of the electrical energy provided, and
in the second operating mode (B2), a wash cycle is provided with cold, non-electrically heated water,
so that an improved wash effect is achieved in the first operating mode (B1) by using less water than in the second operating mode (B2).

2. Method according to claim 1,
**characterised in that**
the data relates to an energy supply (A) in the power supply (2), and the criterion is defined such that it is fulfilled if the energy supply (A) exceeds a predeterminable threshold value (S).

3. Method according to claim 1,
**characterised in that**
the data relates to an energy supply (A) in the power supply (2), and the criterion is defined such that it is fulfilled if an energy price does not reach a predeterminable threshold value.

4. Method according to one of the preceding claims,
**characterised in that**
the washing machine (1) receives the data by way of the power supply (2) and/or by way of a wired communication network, in particular a telephone network, and/or a wireless communication network, in particular a mobile radio network, and/or the internet (4).

5. Washing machine (1) which is embodied to obtain electrical energy by way of a power supply (2) and receive data relating to the electrical energy provided by way of the power supply (2), wherein the washing machine (1) can be operated in a plurality of operating modes (B1, B2) and in a first (B1) of the operating modes has a higher electrical input power than in a second (B2) of the operating modes, wherein if the received data fulfils a definable criterion relating to the electrical energy provided by way of the power supply (2), the washing machine (1) is also embodied to pass from an at least initiated operation of the washing machine (1) in the second operating mode (B2), into the first operating mode (B1) and otherwise to be operated in the second operating mode (B2),
**characterised in that**
the first operating mode (B1) comprises a wash cycle with water, which is heated by way of the electrical energy provided, and
in the second operating mode (B2) a wash cycle with cold, non-electrically heated water is provided,
so that an improved wash effect is achieved in the first operating mode (B1) using less water than in the second operating mode (B2).

6. Washing machine according to claim 5, wherein in the first operating mode (B1), a switch-on duration of an electric motor for the operation of a laundry drum (6) of the washing machine (1) is greater than in the second operating mode (B2).

## Revendications

1. Procédé permettant de sélectionner un mode de fonctionnement parmi plusieurs modes de fonctionnement (B1, B2) d'une machine à laver (1) conçue pour obtenir de l'énergie électrique par l'intermédiaire d'un réseau électrique (2) et pour recevoir des données concernant l'énergie électrique fournie par l'intermédiaire du réseau électrique (2), la puissance électrique absorbée par la machine à laver (1) dans un premier (B1) des modes de fonctionnement étant supérieure à celle qui est absorbée dans un deuxième (B2) des modes de fonctionnement, comprenant les étapes :
- fixation d'un critère pour les données concernant l'énergie électrique fournie par l'intermédiaire du réseau électrique (2) ;
- lancement au moins d'un fonctionnement de la machine à laver (1) dans le deuxième mode de fonctionnement (B2) ;
- réception par la machine à laver (1) de données concernant l'énergie électrique fournie par l'intermédiaire du réseau électrique (2) ;
- si les données reçues remplissent le critère fixé, fonctionnement de la machine à laver (1) dans le premier mode de fonctionnement (B1), sinon fonctionnement de la machine à laver (1) dans le deuxième mode de fonctionnement (B2),
**caractérisé en ce que**
le premier mode de fonctionnement (B1) comprend un processus de lavage avec de l'eau qui est chauffée grâce à l'énergie électrique fournie et un processus de lavage avec de l'eau froide, non chauffée par l'énergie électrique, est prévu dans le deuxième mode de fonctionnement (B2), de sorte que l'on obtient une meilleure action de lavage dans le premier mode de fonctionnement (B1) que dans le deuxième mode de fonctionnement (B2), tout en utilisant moins d'eau.

2. Procédé selon la revendication 1, **caractérisé en ce que** les données concernent une offre d'énergie (A) dans le réseau électrique (2) et le critère est fixé de manière à être rempli lorsque l'offre d'énergie (A) dépasse une valeur seuil (S) pouvant être prédéterminée.

3. Procédé selon la revendication 1, **caractérisé en ce que** les données concernent une offre d'énergie (A) dans le réseau électrique (2) et le critère est fixé de manière à être rempli lorsqu'un tarif de l'énergie passe sous une valeur seuil pouvant être prédéterminée.

4. Procédé selon l'une des revendications précédentes, **caractérisé en ce que** la machine à laver (1) reçoit les données par le biais du réseau électrique (2) et/ou par le biais d'un réseau de communication câblé, notamment un réseau téléphonique, et/ou d'un réseau de communication sans fil, notamment un réseau de téléphonie mobile, et/ou de l'Internet (4).

5. Machine à laver (1) conçue pour obtenir de l'énergie électrique par l'intermédiaire d'un réseau électrique (2) et pour recevoir des données concernant l'énergie électrique fournie par l'intermédiaire du réseau électrique (2), la machine à laver (1) pouvant fonctionner selon plusieurs modes de fonctionnement (B1, B2) et sa puissance électrique absorbée dans un premier (B1) des modes de fonctionnement étant supérieure à celle qui est absorbée dans un deuxième (B2) des modes de fonctionnement, la machine à laver (1) étant conçue en outre pour passer d'un fonctionnement de la machine à laver (1) au moins lancé dans le deuxième mode de fonctionnement (B2) au premier mode de fonctionnement (B1) si les données reçues remplissent un critère pouvant être fixé concernant l'énergie électrique fournie par l'intermédiaire du réseau électrique (2) et, sinon, pour fonctionner dans le deuxième mode de fonctionnement (B2),
**caractérisée en ce que**
le premier mode de fonctionnement (B1) comprend un processus de lavage avec de l'eau qui est chauffée grâce à l'énergie électrique fournie et un processus de lavage avec de l'eau froide, non chauffée par l'énergie électrique, est prévu dans le deuxième mode de fonctionnement (B2), de sorte que l'on obtient une meilleure action de lavage dans le premier mode de fonctionnement (B1) que dans le deuxième mode de fonctionnement (B2), tout en utilisant moins d'eau.

6. Machine à laver selon la revendication 5, un temps de démarrage d'un moteur électrique pour le fonctionnement d'un tambour (6) de la machine à laver (1) étant plus long dans le premier mode de fonctionnement (B1) que dans le deuxième mode de fonctionnement (B2).
